# EUROPEAN PATENT SPECIFICATION

(11) **EP 3 220 539 B1**
(45) Date of publication and mention of the grant of the patent: **21.04.2021**
(21) Application number: 17158224.0
(22) Date of filing: 27.02.2017
(51) Int. Cl.: H02P 29/024, H02H 7/08

(54) **MOTOR CONTROLLER**
MOTORSTEUERUNG
COMMANDE DE MOTEUR

(30) Priority: 15.03.2016 JP 2016051633; 21.02.2017 JP 2017030492
(43) Date of publication of application: 20.09.2017
(73) Proprietor: Omron Corporation, Kyoto-shi, Kyoto 600-8530 (JP)
(72) Inventor: KIRIBUCHI, Takeshi, Kyoto-shi, Kyoto 600-8530 (JP); JIMBO, Ryuichi, Kyoto-shi, Kyoto 600-8530 (JP)
(74) Representative: Horn Kleimann Waitzhofer Patentanwälte PartG mbB

(56) References cited:
- US-A1- 2008 291 588
- US-A1- 2014 092 655
- US-A1- 2015 145 448

## Description

### FIELD

The present invention relates to a motor controller.

### BACKGROUND

A motor controller is known which includes a safety circuit that stops a motor in a safe manner in response to an input from, for example, an emergency stop switch (JP 2010-104187A). A motor controller described in JP 2010-104187A includes a safety circuit (safety stop circuit) arranged between a pulse width modulation (PWM) circuit, which generates a PWM signal for driving a motor, and a drive circuit, which drives an inverter. The safety circuit includes a three-state buffer. The safety circuit uses an input from a motor stop switch as an input for controlling the three-state buffer to cut off a PWM signal that is input to the drive circuit.

A motor controller uses a three-phase power supply line to supply power to a motor.

An inverter that receives an input of a PWM signal includes three pairs of switching elements corresponding, respectively, to the U phase, the V phase, and the W phase of the motor. More specifically, the inverter includes a series circuit for the U phase including a U-phase upper switching element and a U-phase lower switching element in a pair. The inverter also includes a series circuit for the V phase including a V-phase upper switching element and a V-phase lower switching element in a pair. The inverter further includes a series circuit for the W phase including a W-phase upper switching element and a W-phase lower switching element in a pair. The three series circuits are connected in parallel to a DC power supply. The three pairs of switching elements are connected to their corresponding U-phase, V-phase, and W-phase armature windings. When the safety circuit includes a three-state buffer as described in JP 2010-104187A, an abnormal state of the three-state buffer itself can be detected. However, the safety circuit cannot determine a cause of an abnormality.

US 2008/0291588 A1 discloses a motor control microcomputer for outputting PWM signals to a motor drive circuit driving a motor, which includes an abnormal signal detection circuit and a PWM signal stop circuit. The abnormal signal detection circuit receives inputs of positive-phase and negative-phase signals of the PWM signals, detects that both of the positive-phase and negative-phase signals are at the H level, and then outputs detection signals. The PWM signal stop circuit receives the detection signals from the abnormal signal detection circuit, and stops the outputs of the PWM signals.

### SUMMARY

The invention is defined in claim 1.

In the motor controller the control unit receives at least one output signal from each of the logic gates having two or more inputs or the safety input signal corresponding to the output signal, monitors the safety input signal or the output signal, and diagnoses a failure in the motor controller.

In the motor controller the control unit preferably receives at least one output signal from each the logic gates having two or more inputs and the safety input signal corresponding to the output signal, and diagnoses a state of each of the logic gates having two or more inputs based on the output signal and the safety input signal.

In the motor controller the control unit preferably inputs a self-diagnostic signal to an input terminal of each of the logic gates having two or more inputs, and monitors a signal that is input to the input terminal to monitor signal paths for the logic gates having two or more inputs.

In the motor controller the safety stop circuit preferably receives the motor drive signal and the safety input signal. When the safety input signal is low, the logic gates having two or more inputs output low signals, and the safety stop circuit cuts off the motor drive signal.

The safety circuit that cuts off a PWM signal that is provided to the inverter can appropriately determine a factor for an abnormality.

### BRIEF DESCRIPTION OF THE DRAWINGS

Fig. 1 is a diagram showing the configuration of a motor control system according to one embodiment of the present invention.
Figs. 2A and 2B are diagrams showing the configuration of a safety circuit according to the embodiment of the present invention.

### DETAILED DESCRIPTION

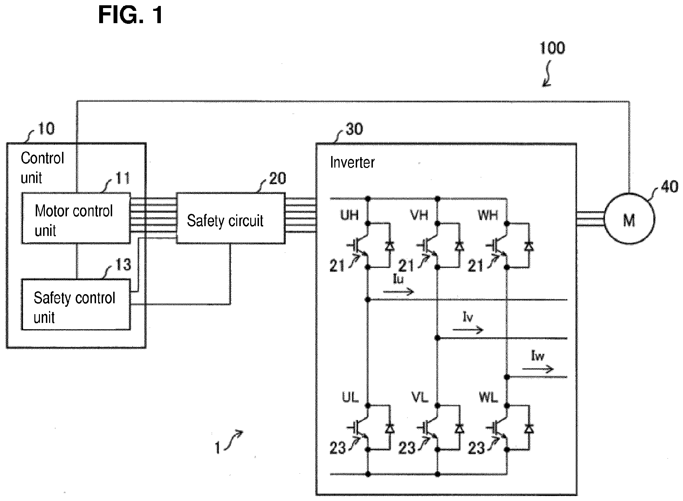

The configuration of a motor control system will now be described with reference to Fig. 1. A motor control system 100 includes a motor 40 and a motor controller 1. The motor controller 1 includes a control unit 10, a safety circuit 20 (safety stop circuit), and an inverter 30.

The control unit 10 includes a motor control unit 11 and a safety control unit 13. The control unit 10 may typically be a microprocessor that reads and executes a software module, or may combine a software module that is implemented by a microprocessor with a dedicated circuit. The control unit 10 may also combine a plurality of software modules that are implemented by microprocessors.

The motor control unit 11 outputs a PWM signal (motor drive signal) for driving the motor 40 based on a command value (motor drive command) from an external device, such as a host device, and a feedback value from a position sensor (not shown).

The inverter 30 typically includes three pairs of switching elements corresponding, respectively, to the U phase, the V phase, and the W phase of the motor 40. More specifically, the pair of switching elements for the U phase includes a U-phase upper switching element UH (21) and a U-phase lower switching element UL (23) that are connected in series, the pair of switching elements for the V phase includes a V-phase upper switching element VH (21) and a V-phase lower switching element VL (23) that are connected in series, and the pair of switching elements for the W phase includes a W-phase upper switching element WH (21) and a W-phase lower switching element WL (23) that are connected in series. The three pairs of switching elements are connected in parallel to a DC power supply (not shown). Each pair of switching elements is connected to the corresponding U-phase, V-phase, or W-phase armature winding of the motor 40 at a node between the upper switching element 21 and the lower switching element 23. The inverter 30 switches the upper switching elements 21 and the lower switching elements 23 based on PWM signals to drive the motor 40.

The safety circuit 20 receives PWM signals for the upper switching elements 21 output from the control unit 10, PWM signals for the lower switching elements 23 output from the control unit 10 , and a safety input signal. When the safety input signal is low, the safety circuit 20 cuts off (interrupts) the PWM signals that are provided to the upper switching elements 21 and the lower switching elements 23 in the inverter 30.

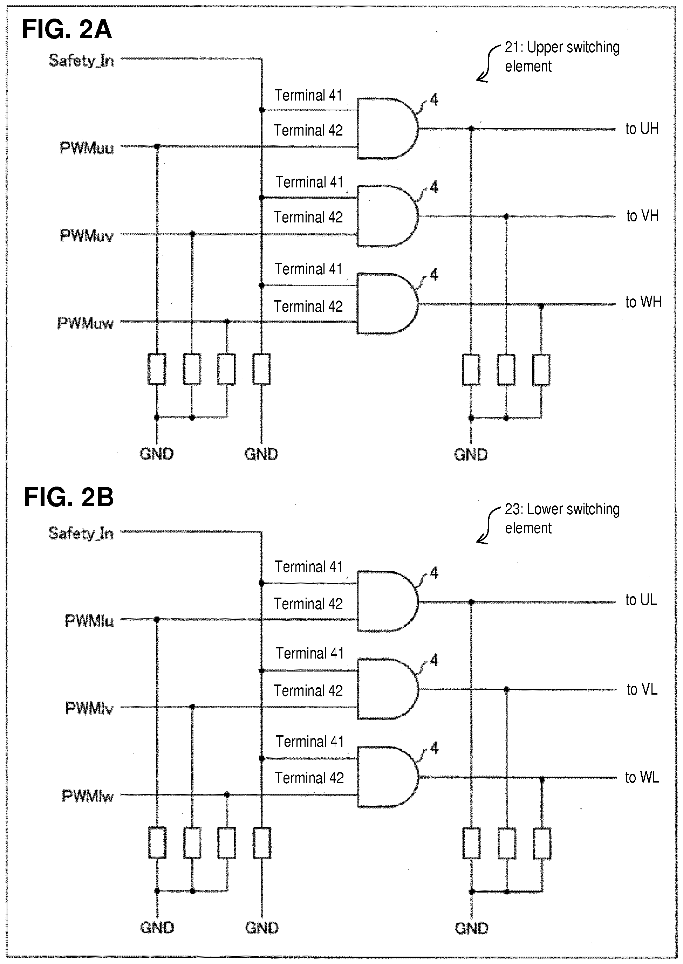

The operation of the safety circuit will now be described in detail with reference to Figs. 2A and 2B.

The safety circuit 20 includes six AND circuits (logical conjunction circuits) 4 having N inputs in correspondence with the upper switching elements 21 and the lower switching elements 23, respectively. The safety circuit 20 receives a safety input signal from a safety controller (not shown) or a safety input signal from the safety control unit 13.

Each AND circuit 4 (logic gate) has an input terminal 41 to which a safety input signal Safety_In is input and an input terminal 42 to which a PWM signal is input. When the safety input signal Safety_In is set high, the AND circuit 4 outputs the PWM signal. On the other hand, when the safety input signal Safety_In is low, the AND circuit 4 outputs a low signal (output signal), and the output of the PWM signal is cut off.

As described above, a safety input signal is input to the AND circuits 4, which also receive PWM signals corresponding, respectively, to the upper switching elements 21 and the lower switching elements 23. This allows the PWM signal that is input to each of the upper switching elements 21 and the lower switching elements 23 to be cut off based on the safety input signal Safety_In.

Monitoring of an output from each AND circuit 4 will now be described. The output from each AND circuit 4 is input to the control unit 10. The safety input signal Safety_In input to the input terminal 41 of each AND circuit 4 is also input to the control unit 10. The control unit 10 monitors both the output from the AND circuit 4 and the safety input signal with respect to each of the upper switching elements 21 and the lower switching elements 23.

When the input safety input signal is low, the control unit 10 determines that the safety circuit 20 is abnormal upon receiving an output other than 0 (low) from any of the AND circuits 4.

When the input safety input signal indicates 1 (high), the control unit 10 determines that the safety circuit 20 is abnormal upon receiving an output from only part of the AND circuits 4, that is, if there is an AND circuit 4 that does not output a PWM signal. When determining that the safety circuit 20 is abnormal, the control unit 10 stops outputting the PWM signals.

In this manner, the control unit 10 can monitor both the safety input signal Safety_In, which is logically ANDed with each of the upper and lower PWM signals, and the output from each AND circuit 4. As a result, the control unit 10 can diagnose the state of each AND circuit 4, and thus can diagnose a failure in the motor controller 1.

The control unit 10 may also input a self-diagnostic signal to a signal line connected to the input terminal 41 of each AND circuit 4 and monitor the signal input to the input terminal 41 of each AND circuit 4 to monitor an abnormality on the signal path. The self-diagnostic signal may typically be a pulse signal with a predetermined fall time and a predetermined rise time.

The control unit 10 can be configured to monitor the six AND circuits 4 and the signal lines through which signals are input to the respective AND circuits 4. Therefore, it is possible to appropriately determine which of the AND circuits 4 and the signal lines constitutes a factor for an abnormality.

It should be noted that if an abnormality occurs in the three-state buffer disclosed in JP 2010-104187A, there is a possibility of all the PWM signals output from the three-state buffer becoming abnormal, bringing the motor M into an abnormal state.

In contrast, the safety circuit 20 according to the present embodiment is divided into a circuit corresponding to the upper switching elements 21 and a circuit corresponding to the lower switching elements 23. With this configuration, even when an abnormality occurs in, for example, the circuit corresponding to the upper switching elements 21 and creates a situation in which all of the upper PWM signals output from this circuit are abnormal, the lower PWM signals output from the circuit corresponding to the lower switching elements 23 may be normal. Therefore, the possibility of all the PWM signals output from the safety circuit 20 becoming abnormal is reduced, and hence the possibility of the motor 40 being brought into an abnormal state is reduced.

Furthermore, the safety circuit 20 includes the six AND circuits 4 corresponding, respectively, to the three upper switching elements 21 and the three lower switching elements 23. With this configuration, even when an abnormality occurs in a certain AND circuit 4, for example, and creates a situation in which the PWM signal output from that AND circuit 4 is abnormal, the PWM signals output from the other AND circuits 4 may be normal. Therefore, the possibility of all the PWM signals output from the safety circuit 20 becoming abnormal is further reduced, and hence the possibility of the motor 40 being brought into an abnormal state is further reduced.

### Additional Embodiments

Although a three-phase motor 40 is used in the foregoing embodiment, a two-phase motor may also be used. In this case, the number of PWM signals can be four, and the number of AND circuits 4 can be four. Although a PWM signal is used as the signal for driving the motor 40 in the foregoing embodiment, a signal for changing the current or voltage that is supplied to the motor 40 may also be used.

Although AND circuits 4 are used in the foregoing embodiment, other types of logic gates such as a NOT-AND (NAND) circuit may also be used. In this case, appropriate phases for the safety input signal and the PWM signals can be set based on the type of the logic gate that is used. Although two signals are input to each AND circuit 4 in the foregoing embodiment, three or more signals may also be input thereto.

Moreover, a drive circuit for driving the upper switching elements 21 and the lower switching elements 23 in the inverter 20 based on a PWM signal from the safety circuit 20 may also be provided between the safety circuit 20 and the inverter 30.

Furthermore, according to another aspect, the following configurations may also be adopted.

That is to say, a motor controller according to this aspect may be a motor controller including a drive circuit that drives an inverter that converts a direct current to an alternating current, a control unit that generates, in response to a motor drive command from an external device, a motor drive signal for driving the drive circuit, and a safety stop circuit that is arranged between the drive circuit and the control unit, wherein the drive circuit includes an upper switching element and a lower switching element, and the safety stop circuit includes logic gates having two or more inputs, the logic gates corresponding, respectively, to the upper switching element and the lower switching element and being configured to cut off the motor drive signal based on a safety input signal.

The present invention is defined in claim 1. The present invention is not limited to the specific embodiments described above.

### LIST OF REFERENCE NUMERALS

- 1: motor controller
- 4: logic gates
- 10: control unit
- 11: motor control unit
- 13: safety control unit
- 20: safety circuit (safety stop circuit)
- 21: upper switching elements
- 23: lower switching elements
- 30: inverter
- 40: motor

## Claims

1. A motor controller (1), comprising:
an inverter (30) configured to convert a direct current to an alternating current;
a control unit (10) configured to generate, in response to a motor drive command from an external device, a motor drive signal for driving the inverter (30); and
a safety stop circuit (20) arranged between the inverter (30) and the control unit (10),
wherein the inverter (30) includes an upper switching element (21) and a lower switching element (23), and
the safety stop circuit (20) includes logic gates (4) having two or more inputs, the logic gates (4) corresponding, respectively, to the upper switching element (21) and the lower switching element (23), wherein the logic gates (4) are configured to cut off the motor drive signal based on a safety input signal,
**characterized in that** the control unit (10) is configured to receive at least one output signal from each of the logic gates (4) having two or more inputs and the safety input signal, to monitor the safety input signal and the output signals, and to diagnose a failure in the motor controller (1).

2. The motor controller (1) according to claim 1,
wherein the control unit (10) is configured to receive at least one output signal from each of the logic gates (4) having two or more inputs and the safety input signal corresponding to the output signal, and to diagnose a state of each of the logic gates (4) having two or more inputs based on the output signal and the safety input signal.

3. The motor controller (1) according to claim 1 or 2,
wherein the control unit (10) is configured to input a self-diagnostic signal to an input terminal of each of the logic gates (4) having two or more inputs, and to monitor a signal that is input to the input terminal to monitor signal paths for the logic gates (4) having two or more inputs.

4. The motor controller (1) according to any of claims 1 to 3,
wherein the safety stop circuit (20) receives the motor drive signal and the safety input signal, and
when the safety input signal is low, the logic gates (4) having two or more inputs output low signals, and the safety stop circuit (20) cuts off the motor drive signal.

## Patentansprüche

1. Motorsteuerung (1), umfassend:
einen Wechselrichter (30), der geeignet ist, einen Gleichstrom in einen Wechselstrom umzuwandeln;
eine Steuereinheit (10), die geeignet ist, in Reaktion auf einen Motoransteuerungsbefehl von einer externen Vorrichtung ein Motoransteuerungssignal zum Ansteuern des Wechselrichters (30) zu erzeugen; und
eine Sicherheitsstoppschaltung (20), die zwischen dem Wechselrichter (30) und der Steuereinheit (10) angeordnet ist,
wobei der Wechselrichter (30) ein oberes Schaltelement (21) und ein unteres Schaltelement (23) enthält, und
die Sicherheitsstoppschaltung (20) Logikgatter (4) mit zwei oder mehr Eingängen enthält, wobei die Logikgatter (4) jeweils dem oberen Schaltelement (21) und dem unteren Schaltelement (23) entsprechen, wobei die Logikgatter (4) geeignet sind, das Motoransteuerungssignal auf der Grundlage eines Sicherheitseingangssignals abzuschalten,
**dadurch gekennzeichnet, dass** die Steuereinheit (10) geeignet ist, mindestens ein Ausgangssignal von jedem der Logikgatter (4) mit zwei oder mehr Eingängen und das Sicherheitseingangssignal zu empfangen, um das Sicherheitseingangssignal und die Ausgangssignale zu überwachen und einen Fehler in der Motorsteuerung (1) zu diagnostizieren.

2. Motorsteuerung (1) nach Anspruch 1,
wobei die Steuereinheit (10) geeignet ist, mindestens ein Ausgangssignal von jedem der Logikgatter (4) mit zwei oder mehr Eingängen und das dem Ausgangssignal entsprechende Sicherheitseingangssignal zu empfangen und einen Zustand jedes der Logikgatter (4) mit zwei oder mehr Eingängen basierend auf dem Ausgangssignal und dem Sicherheitseingangssignal zu diagnostizieren.

3. Motorsteuerung (1) nach Anspruch 1 oder 2,
wobei die Steuereinheit (10) geeignet ist, ein Selbstdiagnosesignal in einen Eingangsanschluss jedes der Logikgatter (4) mit zwei oder mehr Eingängen einzugeben und ein Signal zu überwachen, das in den Eingangsanschluss eingegeben wird, um Signalpfade für die Logikgatter (4) mit zwei oder mehr Eingängen zu überwachen.

4. Motorsteuerung (1) nach einem der Ansprüche 1 bis 3,
wobei die Sicherheitsstoppschaltung (20) das Motorantriebssignal und das Sicherheitseingangssignal empfängt, und
falls das Sicherheitseingangssignal niedrig ist, die Logikgatter (4) mit zwei oder mehr Eingängen niedrige Signale ausgeben, und die Sicherheitsstoppschaltung (20) das Motorantriebssignal unterbricht.

## Revendications

1. Commande de moteur (1), comprenant :
un onduleur (30) configuré pour convertir un courant continu en un courant alternatif ;
une unité de commande (10) configurée pour générer, en réponse à une commande d'entraînement de moteur provenant d'un dispositif externe, un signal d'entraînement de moteur pour entraîner l'onduleur (30) ; et
un circuit d'arrêt de sécurité (20) disposé entre l'onduleur (30) et l'unité de commande (10),
dans lequel l'onduleur (30) comprend un élément de commutation supérieur (21) et un élément de commutation inférieur (23), et
le circuit d'arrêt de sécurité (20) comprend des portes logiques (4) ayant deux entrées ou plus, les portes logiques (4) correspondant, respectivement, à l'élément de commutation supérieur (21) et à l'élément de commutation inférieur (23), dans lequel les portes logiques (4) sont configurées pour couper le signal d'entraînement de moteur sur la base d'un signal d'entrée de sécurité,
**caractérisé en ce que** l'unité de commande (10) est configurée pour recevoir au moins un signal de sortie de chacune des portes logiques (4) ayant deux entrées ou plus et le signal d'entrée de sécurité, pour surveiller le signal d'entrée de sécurité et les signaux de sortie, et pour diagnostiquer une défaillance dans la commande de moteur (1).

2. Commande de moteur (1) selon la revendication 1,
dans lequel l'unité de commande (10) est configurée pour recevoir au moins un signal de sortie de chacune des portes logiques (4) ayant deux entrées ou plus et le signal d'entrée de sécurité correspondant au signal de sortie, et pour diagnostiquer un état de chacune des portes logiques (4) ayant deux entrées ou plus sur la base du signal de sortie et du signal d'entrée de sécurité.

3. Commande de moteur (1) selon la revendication 1 ou 2,
dans lequel l'unité de commande (10) est configurée pour entrer un signal d'autodiagnostic dans une borne d'entrée de chacune des portes logiques (4) ayant deux entrées ou plus, et pour surveiller un signal qui est entré dans la borne d'entrée pour surveiller les chemins de signaux pour les portes logiques (4) ayant deux entrées ou plus.

4. Commande de moteur (1) selon l'une quelconque des revendications 1 à 3,
dans lequel le circuit d'arrêt de sécurité (20) reçoit le signal d'entraînement de moteur et le signal d'entrée de sécurité, et
lorsque le signal d'entrée de sécurité est bas, les portes logiques (4) ayant deux entrées ou plus émettent des signaux bas, et le circuit d'arrêt de sécurité (20) coupe le signal d'entraînement de moteur.
